Europäisches Patentamt

European Patent Office

Office européen des brevets

(11) Publication number: **0 231 036**
**A1**

(12) **EUROPEAN PATENT APPLICATION**

(21) Application number: **87200010.4**

(22) Date of filing: **06.01.87**

(51) Int. Cl.⁴: **C 02 F 3/12**
C 02 F 3/10, B 01 J 8/20

(30) Priority: **08.01.86 NL 8600026**
**20.05.86 NL 8601262**

(43) Date of publication of application:
**05.08.87 Bulletin 87/32**

(84) Designated Contracting States:
**AT BE CH DE ES FR GB GR IT LI LU NL SE**

(71) Applicant: **GIST-BROCADES N.V.**
**Wateringseweg 1**
**NL-2611 XT Delft (NL)**

(72) Inventor: **Heijnen, Joseph Johannes**
**Statenlaan 25**
**NL-5121 HA Rijen (NL)**

**Mulder, Arnold**
**Kluutring 27**
**NL-2623 NM Delft (NL)**

(74) Representative: **Huygens, Arthur Victor, Dr. et al**
**c/o Gist-Brocades N.V. Patent & Trademarks Department**
**Wateringseweg 1 PO Box 1**
**NL-2600 MA Delft (NL)**

(54) **Simultaneous oxidation of reduced S and N compounds.**

(57) A process for biological aerobic purification of waste water in which reduced S and N compounds present in this waste water, are converted under addition of air in one reactor, whereby the liquid in the reactor in which the micro-organisms are present, which are neccessary for the conversions of the reduced S and N compounds, is kept in a well mixed condition.

EP 0 231 036 A1

## Description

Simultaneous oxidation of reduced S and N compounds

The invention relates to a process for the biological aerobic purification of waste water.

Nitrification, the conversion of $NH_4+$ via $NO_2-$ in $NO_3-$, can be carried out using bacteria. However these bacteria have a relatively slow growth rate (duplication time in the order of magnitude of 10-48 hours). Because of the slow growth rate of the nitrifying population the required oxidation time is long. For instance in an article of J. Pascik and T. Mann (Wat. Sci. Technol., 16 (1984) p. 215) it is shown that the treatment time is 2.5 days using an ammonium concentration of 700-900 mg $NH_4+$/l. This corresponds with a nitrification capacity of 0.3-0.4 kg $N/m^3$ reactor per day. Although this hinders the nitrification process, the situation becomes even more unfavourable if the waste water contains besides $NH_4+$ sulphide as well. Usually this occurs in the event of anaerobic purification installations for waste water. Experience shows that by the presence of sulphide the nitrification is strongly inhibited. In the above mentioned article it is mentioned that well-proceeding nitrification is strongly hampered by the temporary presence of 100 mg/l $H_2S$ in the waste water to be nitrified. Both in the above mentioned article of J. Pascik and T. Mann and in an article of J. Blok ($H_2O$, 14 (1981) p. 242) it is described that at sulphide concentrations of more than 10 mg/l the nitrification is strongly hampered.

In the European Patent No. 0051888 a process is described in which in the waste water (containing sulphides and $NH_4+$) the sulphides are first of all microbiologically oxidized by means of $NO_3-$ reduction in a denitrification reactor.

Thereafter the waste water free of sulphides is treated by means of nitrifying bacteria so that $NH_4+$ is converted into $NO_3-$ in a nitrification reactor.

However research shows that by insufficient oxidation of sulphide in the preceding denitrification reactor, the following $NH_4+$ conversion in the nitrification reactor is strongly inhibited which confirms the afore mentioned effect of sulphide.

Consequently the nitrification of waste water containing sulphide has still to be considered as not well practicable on industrial scale. Another problem which is clearly distinguished by the experts, which is described in the European Patent No. 0051888 as well, is the expectable bad smell of the blown out air. For this reason a process according to EP 0051888 is proposed for such waste waters, in which sulphide and $NH_4+$ are oxidised in separated microbiological reactors.

The same opinion of experts appears from the Japanese patent application with publication no. 60-3876 as well. This application describes an anaerobic purification of waste water, followed by a treatment of the effluent by means of a nitrification and denitrification step, in which the effluent containing sulphide from the anaerobic purification, is supplied into the denitrification reactor. Denitrifying bacteria use the sulphides as electron donor for the denitrification of $NO_3-$.

Disadvantages of the above mentioned processes are lying in the recirculation of large quantities of water (technical) and the necessity of using two reactors (economical).

As a result of extensive research a process for biological aerobic purification of waste water has now surprisingly been found, in which reduced S and N compounds present in this waste water, are converted under addition of air in one reactor, whereby the liquid in the reactor in which the micro-organisms are present, which are neccessary for the conversions of the reduced S and N compounds, is kept in a well mixed condition.

Reduced N compounds are for example $NH_4+$ and organic N-compounds such as amines. Reduced S compounds are for example sulphides, sulphites and organic S compounds such as mercaptanes.

The invention will be elucidated into details on the basis of the annexed figures, which by way of example show a possible embodiment of the invention and the results obtained by the process of the invention.

Fig. 1 shows a possible embodiment according to the invention

Fig. 2 shows the course of the $NH_4+$ oxidation (eff = effluent, inf = influent) as measured according to Example 1

Fig. 3 shows the course of $NH_4$-oxidation as measured according to Example 2

Fig. 4 shows the course of the $NH_4+$ oxidation as measured according to Example 3.

Preferably the micro-organisms are attached to a carrier material preferably a carrier of particles with a diameter smaller than 3 mm, a density of more than 1200 $kg/m^3$ and a concentration smaller than 400 $kg/m^3$ reactor volume.

Suitable carrier materials are for example: sand, eifel-lava, anthracite, gravel, pumice, Biogrog N® , basalt, Hydrofilt BS® plastorit Naintsch®.

The liquid in the reactor and the carrier material may be kept in a well mixed condition in every possible way for instance by mechanical stirring or by supplying air and/or waste water at the bottom in the reaction space so that preferably a fluidized-bed situation is obtained. In preferred embodiment according to the invention air, which is supplied to the reactor, has a superficial gas flow of 0-15 cm/s in the reactor.

In a further preferred embodiment hereof the anaerobically pretreated waste water in which residual (biologically degradable) organic carbon compounds, sulphide and $NH_4+$ are present, is supplied to a reactor in which air is blown in as oxygen source and in which a carrier material, overgrown with suitable micro-organisms, is suspended in the reaction liquid. The liquid residence time is chosen to be preferably less than 5 hours, and is therefore considerably less than with conventional nitrification systems (residence time in order of magnitude of days, at least in situations with

comparable $NH_4+$ concentrations). Preferably a fluidized-bed reactor is used.

Although with this process immediately after the starting up bad smelling components had been present in the discharged air, while during the first days there had been hardly $NH_4+$ oxidation as well, surprisingly however it appeared that, despite the very high reactor load and the presence of sulphide, the sulphide is oxidized almost completely and the bad smell problem disappears whereafter the $NH_4+$-oxidation started quickly. The sulphide oxidation starts fast and within a week the sulphide oxidation reaches an almost complete conversion. The sulphides are converted for more than 98% whereby more than 95% of the sulphides are converted into sulphate. Rests (biologically degradable) organic carbon compounds had been converted by heterotrophic micro-organisms. At a high reactor load nitrogen conversion capacities of 1.2 to 2.4 kg nitrogen/$m^3$ per day are reached. In course of time the $NH_4+$ oxidation appears to take place for more than 95%, first mainly $NO_2-$ is formed, lateron the formation of $NO_3-$ starts well.

From microscopical observations it appeared that the micro-organisms necessary for sulphide, $NH_4+$ and $NO_2-$ oxidation (micro-organisms for example belonging to the genera Thiobacillus, Nitrosomonas and Nitrobacter, respectively), were growing like firm biolayers on the available carrier particles in the fluidized bed reactor.

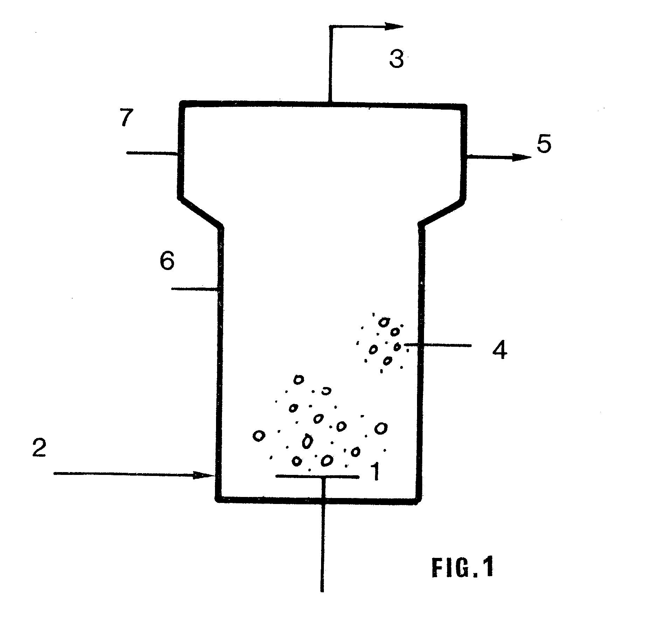

In a possible embodiment of the process according to the invention air is blown via a gas distributor 1 known per se (see Figure 1) into a reactor 6. Waste water is introduced in the reactor through one or more pipes 2.

The reaction space is well mixed by just the blowing in of air. Superficial gas velocities are preferably between 0-15 cm/s. The height of this air velocity is determined by the need of oxygen for the COD, $S^2-$ and $NH_4+$ oxidation. The amount of waste water which is supplied, is chosen in such a way that the criterium of the liquid residence time is met as mentioned in the European Patent Application 0028846. According to this patent application to obtain biomass attached to a carrier in a reaction space a waste water flow is needed with a sufficiently wide flora of micro-organisms and sufficient nutrients for the growth of and/or preservation of the micro-organisms. A sufficiently thick layer of micro-organisms is attached to the carrier, while the residence time of the liquid in the reactor is taken lower than the reciprocal specific growth rate of the micro-organisms resulting in that the non adhering micro-organisms can not accumulate in the reaction space. When the waste water itself does not contain the necessary micro-organisms these micro-organisms may of course be added by inoculation or by an other method.

In the reactor (see Figure 1) a carrier material 4 is present having a particle diameter of smaller than 3 mm, preferably smaller than 1 mm, the density of the carrier is at least 1200 kg/$m^3$, and the concentration of the carrier is smaller than 400 kg/$m^3$ reactor volume at a homogeneous distribution through the reactor. The purified waste water leaves the reactor through outlet 5 and the air blown through leaves the reactor through the gasoutlet 3.

The temperature and the pH in the reactor are chosen in such a way that these are favourable for microbial conversions namely a temperature of 5-60°C and pH 6-9 in the reactor. The overgrown carrier material can be kept in the reactor using a separator 7 known per se. Such a separator is for example essentially known from the European patent application No. 0090450.

Example 1

Through a 2-litre reactor, having a diameter of 5 cm and a height of 1 m, anaerobically purified waste water was pumped at a liquid residence time of 2 hours. This waste water contained oxidizable components including about 150 mg/l sulphide and 200 mg/l $NH_4+$-nitrogen.

The superficial air velocity in the reactor was 6 cm/s, the temperature 35°C and the pH = 7.

During the start of the experiment 150 g/l reactor volume of carrier material (lava) was present (particles of 0.2-0.3 mm in diameter, density 2400 kg/$m^3$).

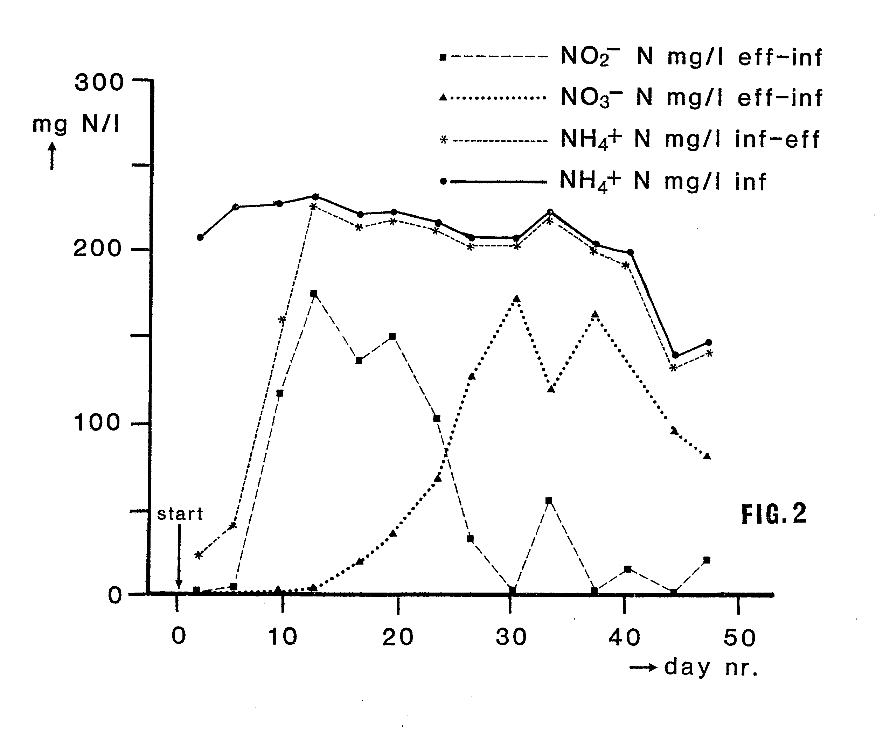

In Figure 2 the course of the $NH_4+$-oxidation is shown (eff = effluent, inf = influent). The $NH_4+$-oxidation to $NO_2-$ was almost complete after 14 days and the $NO_3-$ formation started well after 30 days. The sulphide oxidation already reached after 7 days a conversion which was almost complete, sulphide was converted for more than 98%, and was converted for more than 95% in the sulphate.

The biomass concentration on carrier was after several weeks 10-25 g o.s./l.

Example 2

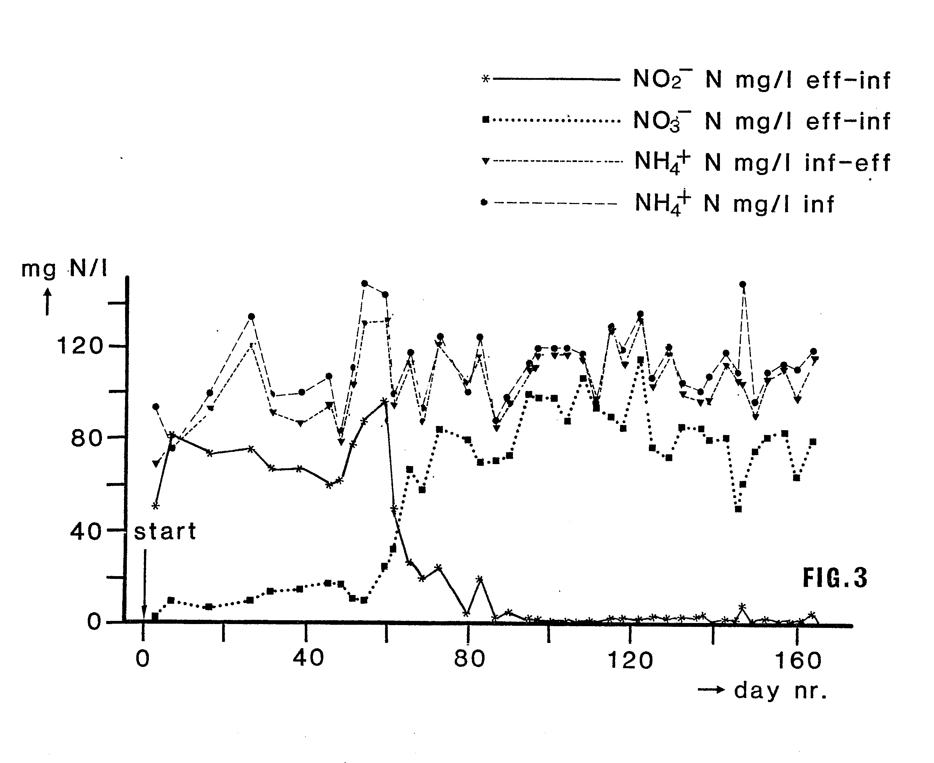

Through a reactor having a content of 25 l anaerobically purified waste water was pumped at a hydraulic liquid residence time of 2 hours (till day 100 of Figure 3) and 2.5 hours (after day 100 of Figure 3). This waste water contained 115-150 mg/l sulphide and 100-130 mg/l $NH_4+$-nitrogen. The superficial air velocity in the reactor amounted 5.6 cm/s, the temperature 30°C and the pH 7.0 to 7.2.

In the reactor a carrier concentration of an average of 160 g/l reactor volume was present, the density of the used carrier material (pumice) amounted 1600 kg/$m^3$.

In Figure 3 the course of the $NH_4+$ nitrogen oxidation is shown. The sulphide oxidation reached an almost complete conversion within a week, the sulphide was converted for more than 98%, and was converted for more than 95% in sulphate. The contents of sulphate in the influent amounted lower than 25 mg $SO_4^{2-}$/l; the concentrations in the effluent amounted 350-450 mg $SO_4^{2-}$/l. Figure 3 further shows that the process gives well stable results over a long period of 100 days.

Moreover about 40 mg of organic carbon/l waste water was oxidized biologically.

The final biomass concentrations on carrier amounted 15-25 g o.s./l.

Example 3

In a 400 l reactor (pilot plant scale) sulphide and ammoniak were oxidized simultaneously in anaerobically purified waste water.

The hydraulic residence time amounted the first 75 days 2 hours and thereafter 3 hours. The waste water contained 115-150 mg/l sulphide and 100-130 mg/l $NH_4+$-nitrogen. The carrier concentration has an average of 150 g/l reactor volume, the density of the carrier material (pumice) is 1600 kg/m$^3$. The biomass amounted 10-25 g o.s./l. The temperature in the reactor was 30-35°C and the superficial air velocity amounted 6.2 cm/s.

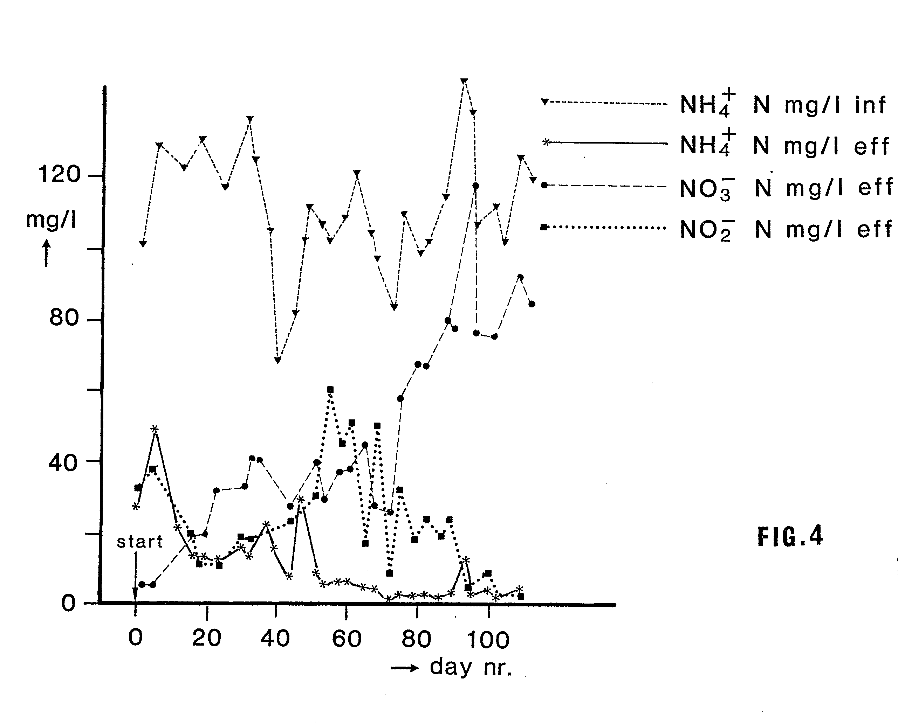

In Figure 4 the course of the $NH_4+$-nitrogen oxidation is shown, in course of time this appears to take place for more than 95%.

The sulphide oxidation reached an almost complete conversion within a week, the sulphide was converted for more than 98% and was converted for more than 95% in sulphate.

## Claims

1. Process for the biological aerobic purification of waste water, characterized in that reduced S and N compounds present in this waste water, are converted under addition of air in one reactor whereby the liquid in the reactor in which the micro-organisms are present which are necessary for the conversions of reduced S and N compounds, is kept in a well mixed condition.

2. Process according to claim 1, characterized in that substantial amounts of sulphide and $NH_4+$ are present in the waste water.

3. Process according to claim 1, characterized in that the micro-organisms are attached to a carrier material having a density at least 1200 kg/m$^3$ and a diameter of the carrier particles of smaller than 3 mm and the concentration of the carrier material of less than 400 kg/m$^3$ reactor volume.

4. Process according to claims 1-3, characterized in that the reduced S and N compounds are converted in a fluidized-bed reactor.

5. Process according to claims 1-4, comprising the introduction of air and/or waste water into the reactor in such a way that the reactor liquid and the carrier material are kept in a well mixed condition.

6. Process according to claims 1-5, characterized in that the air which is supplied into the reactor, has a superficial gas velocity of 0-15 cm/s in the reactor.

7. Process according to claims 1-6, characterized in that the liquid residence time amounts less than 5 hours.

8. Process according to claims 3-7, characterized in that the carrier material is suspended in the reactor liquid.

9. Process according to claims 1-8, characterized in that the temperature amounts 5-60°C and the pH 6-9 in the reactor.

FIG.1

FIG. 2

Legend:
- ■ ---- NO₂⁻ N mg/l eff-inf
- ▲ ···· NO₃⁻ N mg/l eff-inf
- ✳ ---- NH₄⁺ N mg/l inf-eff
- ● —— NH₄⁺ N mg/l inf

y-axis: mg N/l (0, 100, 200, 300)
x-axis: day nr. (0, 10, 20, 30, 40, 50)
start

0231036

FIG.3

Legend:
* ——— $NO_2^- $ N mg/l eff-inf
■ ·········· $NO_3^-$ N mg/l eff-inf
▼ --------- $NH_4^+$ N mg/l inf-eff
● --------- $NH_4^+$ N mg/l inf

Y-axis: mg N/l
X-axis: day nr.

start

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 024 758 (GIST-BROCADES) * Page 6, claims 1,3,4,5; page 1, lines 3-24; page 3, lines 20-33 * | 1-9 | C 02 F 3/12 C 02 F 3/10 B 01 J 8/20 |
| Y | JOURNAL OF THE WATER POLLUTION CONTROL FEDERATION, vol. 56, no. 9, September 1984, pages 1050-1058, Washington, D.C., US; F. LU et al.: "Nitrification of anaerobically treated coal gasifier effluent" * Page 1050, introduction: "Experimental apparatus", "Feed substrate"; page 1053, "Results and discussion" * | 1-9 | |
| Y | CHEMICAL ABSTRACTS, vol. 102, no. 8, 25th February 1985, page 295, abstract no. 66788u, Columbus, Ohio, US; P.N. PAUL et al.: "Sewage treatment in Abu Dhabi", & WATER SCI. TECHNOL. 1984, 16(12), 609-20 | 1-9 | TECHNICAL FIELDS SEARCHED (Int. Cl.4) C 02 F |

-/-

The present search report has been drawn up for all claims

| Place of search | Date of completion of the search | Examiner |
|---|---|---|
| THE HAGUE | 09-04-1987 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| | **DOCUMENTS CONSIDERED TO BE RELEVANT** | | Page 2 |

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 96, no. 16, 19th April 1982, page 409, abstract no. 129017x, Columbus Ohio, US; G.W. CHONG et al.: "Single stage nitrification of coke plant wastewater", & U.S. ENVIRON. PROT. AGENCY, OFF. RES. DEV. [REP] EPA 1981, EPA-600/9-81-017, PROC.: SYMP. IRON STEEL POLLUT. ABAT'MENT TECHNOL., PB81-244808, 395-455 ----- | 1-9 | |
| | | | TECHNICAL FIELDS SEARCHED (Int. Cl.4) |

| The present search report has been drawn up for all claims | | | |
|---|---|---|---|
| Place of search THE HAGUE | Date of completion of the search 09-04-1987 | | Examiner TEPLY J. |